# EUROPEAN PATENT APPLICATION

(11) **EP 4 195 571 A1**
(43) Date of publication of application: **14.06.2023**
(21) Application number: 21865664.3
(22) Date of filing: 05.07.2021
(51) Int. Cl.: H04L 5/00

(54) **SRS TRANSMISSION METHOD, TERMINAL, AND STORAGE MEDIUM**

(30) Priority: 14.09.2020 CN 202010960731
(71) Applicant: ZTE Corporation, Shenzhen, Guangdong 518057 (CN)
(72) Inventor: SHEN, Shaowu, Shenzhen, Guangdong 518057 (CN)
(74) Representative: Canzler & Bergmeier Patentanwälte Partnerschaft mbB
(86) International application number: PCT/CN2021/104561
(87) International publication number: WO 2022/052608

(57) **Abstract**

A sounding reference signal (SRS) transmission method, a terminal, and a storage medium. The SRS transmission method comprises: obtaining a channel quality parameter of a transmission path of a channel SRS (S 100); and determining an interfered scenario of the SRS according to the channel quality parameter, and performing an adjustment policy corresponding to the determined interfered scenario (S200).

## Description

### CROSS-REFERENCE TO RELATED APPLICATION

This application is filed on the basis of Chinese patent application 202010960731.6 filed September 14, 2020, and claims priority to the Chinese patent application, the entire contents of which are incorporated herein by reference.

### TECHNICAL FIELD

The present disclosure relates to, but not limited to, the technical field of communication, in particular to an SRS transmission method, a terminal device and a storage medium.

### BACKGROUND

With the development of communication technology, 5G communication is applied more and more widely. A terminal device adopts Multiple Input Multiple Output (MIMO) technology with multiple antennas, and the use of MIMO antennas improves the spatial multiplexing gain and greatly improves the transmission performance. A wireless performance parameter is an indication of transmission performance, and the wireless performance parameter of the terminal device usually depends on resources allocated by a base station. The terminal device sends a Sounding Reference Signal (SRS) to the base station, and the base station obtains a detection result of channel quality according to the SRS and allocates resources according to the detection result. Due to a large number of antennas and channels, the SRS is easily interfered by various factors in a transmission path, resulting in less resources allocated by the base station according to the SRS, which affects the transmission performance of the terminal device.

### SUMMARY

The following is a summary of the subject matter described in detail herein. This summary is not intended to limit the scope of protection of the claims.

Embodiments of the present disclosure provide a Sounding Reference Signal (SRS) transmission method, a terminal device and a storage medium.

In accordance with an aspect of the present disclosure, an embodiment provides an SRS transmission method, which is applied to a terminal device. The method includes: acquiring a channel quality parameter of a transmission path of an SRS; determining an interfered scenario of the SRS according to the channel quality parameter, and adjusting the transmission path according to the interfered scenario.

In accordance with another aspect of the present disclosure, an embodiment further provides a terminal device. The terminal device includes: a memory, a processor, and a computer program stored in the memory and executable by the processor, where the computer program, when executed by the processor, causes the processor to perform the SRS transmission method described above.

In accordance with another aspect of the present disclosure, an embodiment further provides a computer-readable storage medium storing a computer-executable instruction which is used to perform the SRS transmission method described above or the SRS transmission method described above.

Other features and advantages of the present disclosure will be set forth in the following description, and partly become obvious from the description, or understood by implementing the present disclosure. The objects and other advantages of the present disclosure can be realized and obtained by the structure particularly pointed out in the description, claims, and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and do not constitute a limitation to the technical schemes of the present disclosure.
Fig. 1 is a flowchart of an SRS transmission method applied to a terminal device provided by an embodiment of the present disclosure;
Fig. 2 is a flowchart of triggering transmission path adjustment in an SRS transmission method provided by another embodiment of the present disclosure;
Fig. 3 is a flowchart of determining an interfered scenario according to uplink signal power in an SRS transmission method provided by another embodiment of the present disclosure;
Fig. 4 is a flowchart of determining an interfered scenario according to channel power in an SRS transmission method provided by another embodiment of the present disclosure;
Fig. 5 is a flowchart of determining an interfered scenario according to a conduction path quality parameter in an SRS transmission method provided by another embodiment of the present disclosure;
Fig. 6 is a flowchart of performing transmission path adjustment according to uplink signal power in an SRS transmission method provided by another embodiment of the present disclosure;
Fig. 7 is a flowchart of performing transmission path adjustment according to channel power in an SRS transmission method provided by another embodiment of the present disclosure;
Fig. 8 is a flowchart of performing transmission path adjustment according to a conduction path quality parameter in an SRS transmission method provided by another embodiment of the present disclosure;
Fig. 9 is a flowchart of an SRS transmission method provided by another embodiment of the present disclosure after transmission path adjustment;
Fig. 10 is a schematic diagram of functional modules of a terminal device for performing an SRS transmission method provided by another embodiment of the present disclosure; and
Fig. 11 is a schematic structural diagram of a path recombination module of a terminal device for performing an SRS transmission method provided by another embodiment of the present disclosure.

### DETAILED DESCRIPTION

In order to make the objects, technical schemes and advantages of the present disclosure clear, the present disclosure will be further described in detail in conjunction with the drawings and embodiments. It should be understood that the specific embodiments described here are only used to illustrate the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish between similar objects, and are not necessarily used to describe a specific sequence or a precedence order.

Embodiments of the present disclosure provide a Sounding Reference Signal (SRS) transmission method, a terminal device and a storage medium. The SRS transmission method includes: acquiring a current transmission demand of a terminal device and a current first wireless performance parameter of the terminal device, and determining a wireless performance parameter threshold according to the current transmission demand; when the first wireless performance parameter is smaller than the wireless performance parameter threshold, determining a transmission path of an SRS, and acquiring a channel quality parameter of the transmission path; and determining an interfered scenario of the SRS according to the channel quality parameter, and adjusting the transmission path according to the interfered scenario. According to the schemes provided by the embodiments of the present disclosure, an interfered scenario of the SRS is determined when the current wireless performance parameter is less than the wireless performance parameter threshold, and the transmission path of the SRS is adjusted according to the interfered scenario, such that the interference to the SRS in the transmission path can be reduced, the SRS received by the base station is more stable, and more accurate resources can be allocated to the terminal device, thus improving wireless performance parameters and transmission performance of the terminal device.

It should be noted that the terminal device described in the embodiment of the present disclosure may be of any type, such as a 5G mobile phone, a tablet computer and the like, or Customer Premise Equipment (CPE) and the like, as long as it can communicate with a base station through an SRS and acquire resources allocated by the base station to determine the wireless performance, and may also be applied to an antenna selection path module of the terminal device. For convenience of description, the terminal device in the following embodiment will be illustrated in principle by taking a 5G terminal device as an example, which will not be repeated later. It should be noted that in the embodiment of the present disclosure, no improvement will be made to the networking mode, antenna number and transceiving mode of the 5G terminal device. For example, the networking mode may be common Non Stand Alone (NSA) or Stand Alone (SA), the antenna number may be determined according to the networking mode, for example, the antenna number may be 6 for NSA, and 4 for SA, and the transceiving mode may be common 1T2R (one antenna for transmitting and one antenna for receiving), 2T4R (two antennas for transmitting and four antennas for receiving) or 1T4R (one antenna for transmitting and four antennas for receiving), and the like, which will not be limited in this embodiment, as long as the transmission path of the SRS can be adjusted. The above will not be repeated later.

It should be noted that the SRS transmission method in the embodiment of the present disclosure may exist in the form of an openable function in the terminal device, for example, a function of "SRS anti-interference mode" set in the terminal device, which can be enabled or disabled by a user through the operation of the terminal device, or may be a system function that is enabled by default in the terminal device. The specific mode can be determined according to the actual situation of the terminal device, which will not be repeated later.

The embodiments of the present disclosure will be further illustrated in conjunction with the accompanying drawings.

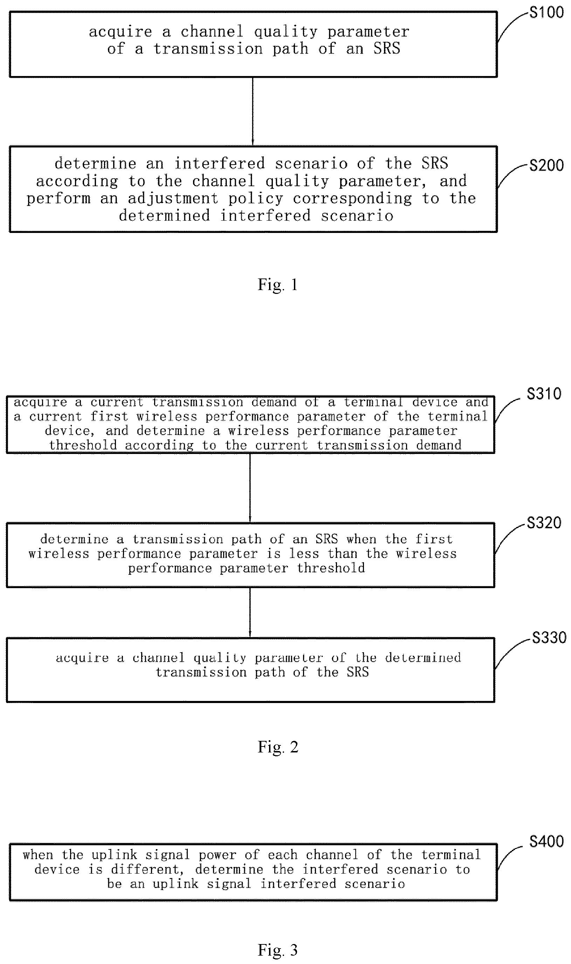

Fig. 1 is a flowchart of performing an SRS transmission method by a terminal device provided by an embodiment of the present disclosure. As shown in Fig. 1, the SRS transmission method includes, but not limited to, the following steps S100 and S200.

At S 100, a channel quality parameter of a transmission path of an SRS is acquired.

In an embodiment, in a case where the bandwidth allows, the terminal device can acquire sufficient wireless performance resources by sending an SRS to the base station. When a first wireless performance parameter is less than a wireless performance parameter threshold, the SRS sent by the terminal device is interfered, resulting in that the acquired wireless performance resources cannot meet the service demand. It should be noted that there is interference or intertwining among multiple antennas of the terminal device, and the antenna selection or reported value of the SRS may be deviated, resulting in the reporting of crossed signal values to the base station, and the base station erroneously evaluates the channel quality of each antenna channel and gives a lower scheduling. This embodiment only discusses the interference caused in the transmission path, and other types of interference are beyond the discussion scope of this embodiment, which will not be repeated here.

In an embodiment, the channel quality parameters of the transmission path may be uplink and downlink throughput, Reference Signal Receiving Power (RSRP), Signal Noise Ratio (SNR), Channel Quality Indication (CQI), bit error ratio, the highest supportable Modulation and Coding Scheme (MCS), and the like, which can reflect the channel quality. It can be understood that the channel quality parameters may be acquired from a radio-frequency chip module and a baseband chip module of the terminal device, or may be acquired from the reported values of a modem, for example, corresponding values are captured from a report log of the modem. The specific mode may be selected according to the actual demand, which will not be described in detail here. It should be noted that, in order to acquire the channel quality parameters, the quality of transmitted and received signals of each channel of the terminal device may be evaluated by a channel pre-calculation evaluation function module of the terminal device. For example, uplink signal power can be obtained by evaluating information of uplink channels. For another example, parameters such as RSRP, SNR, and the like are obtained by detecting the level of each downlink channel. The specific data acquisition method may include the existing technical contents, and this embodiment does not involve the improvement to the specific parameter acquisition method, and thus it will not be limited here.

In an embodiment, interference weight parameters may also be set when the channel quality parameters are acquired. For example, parameters such as conduction performance of signals in transmission paths and antenna efficiency are usually fixed and known, so these parameters may be set as fixed parameters. Since application scenarios and external factors of the terminal device may cause certain interference, such as the current handheld mode, antenna orientation, co-channel interference, and the like, interference weight parameters may be set on the basis of the fixed parameters, which may be preset weight values or weight coefficients. For example, when the fixed parameters are fixed, if it is detected that the handheld mode is landscape, the interference weight parameters corresponding to the landscape are acquired, and the channel quality parameters are collected according to the fixed parameters and the interference weight parameters, such that the acquired channel quality parameters are more in line with actual situations and the accuracy of transmission path adjustment is improved.

In an embodiment, prior to acquiring the channel quality parameters, network mode parameters may also be acquired, for example, it may be detected whether a current SRS message mode is 1T2R, 2T4R or 1T4R, whether the networking mode is the NSA mode or SA mode, and what the air interface standard is, etc. According to the specific network parameter mode, the specific channel quality parameters collected can be determined. For example, in the NSA mode, network parameters such as frequency band and frequency channel number, bandwidth, modulation mode, MIMO stream number, and the like of the air interface may also be collected. The specific network mode parameter acquisition method may use the existing schemes, which will not be described in detail here.

At S200, an interfered scenario of the SRS is determined according to the channel quality parameters, and an adjustment policy corresponding to the determined interfered scenario is performed.

It should be noted that the terminal device usually has multiple antennas. In order to improve the use efficiency of transmission paths, the terminal device needs to inform the base station of the signal capability of each transmission path through an SRS, such that the base station allocates more accurate resources to the terminal device. Therefore, the more the antennas that can participate in transmitting SRS, the more accurate the calculation of the channel capability by the base station, and the larger the wireless performance parameters that the terminal device can acquire. In this case, a lot of interferences are caused between antennas, so it is necessary to determine an interfered scenario of an SRS through channel quality parameters, so as to obtain a more targeted adjustment method.

In an embodiment, the adjustment of transmission paths can be realized by means of an interference adjustment function of the terminal device. After a specific adjustment scheme is determined according to the interfered scenario, an interference adjustment module sends the adjusted scheme of the transmission paths to a control module of the terminal device, so that the control module of the terminal device sends an SRS according to the adjusted scheme of the transmission paths. It should be noted that there may be any number of the interfered scenarios, so there may be one or more adjustment policies that are obtained. In this case, the interference adjustment module may be applied by using each of the adjustment schemes separately. If the adjusted wireless performance parameters meet the wireless performance parameter threshold, no other adjustments are required. Alternatively, a plurality of adjustment schemes may be used cooperatively to improve the adjustment effect of the transmission paths. The specific method is determined according to actual demands, as long as the adjusted wireless performance parameters can meet the wireless performance parameter threshold.

In addition, referring to Fig. 2, in an embodiment, prior to performing S100 in the embodiment shown in Fig. 1, the method further includes, but not limited to, following steps S310 to S330.

At S310, a current transmission demand of a terminal device and a current first wireless performance parameter of the terminal device are acquired, and a wireless performance parameter threshold is determined according to the current transmission demand.

At S320, a transmission path of an SRS is determined when the first wireless performance parameter is less than the wireless performance parameter threshold.

At S330, a channel quality parameter of the determined transmission path of the SRS is acquired.

In an embodiment, the current transmission demand of the terminal device may be acquired by means of a common demand detection method. For example, statistics may be collected, for real-time demand or demand over a period of time, on all services in the terminal that require uploading and/or downloading data, and a bandwidth that meets all service demands may be acquired as the current transmission demand. It can be understood that when determining the current transmission demand, an environment where the terminal device is located currently and a personalized demand of a user may also be comprehensively considered. For example, when it is detected that the environment where the terminal device is located is underground or indoor, because the signal is greatly interfered, adaptive increase may be made on the basis of the bandwidth that meets all service demands. For example, weighted values may be set according to different scenarios. For another example, the user may set an operating temperature of the terminal device to prevent the terminal device temperature from getting too high when the data flow is too large. Those having ordinary skills in the art would be motivated to adjust the specific values according to actual situations. The specific mode is not the improvement made in this embodiment, which will not be described in detail here.

In an embodiment, the wireless performance parameter threshold may be the real-time uploading amount and/or the real-time downloading amount that can meet the service demands. For example, when executing downloading tasks, the wireless performance parameter threshold may be the maximum downloading amount that the terminal device can achieve; or may also be the sum of wireless performance parameters that meet the service demands within a certain period of time. For example, when watching live video on the terminal device, it is required to have uploading amount and downloading amount to meet live broadcast demands within a certain period of time. The specific selection method of the wireless performance parameter threshold may be adjusted according to the actual service demand of the terminal device.

In an embodiment, the first wireless performance parameter may be the real-time uploading amount and/or downloading amount of the terminal device in practical application. Of course, the wireless performance parameter for a period of time may be selected according to the service demand and adjusted according to actual demands, which will not be described in detail here.

In addition, in an embodiment, the channel quality parameter includes uplink signal power. Referring to Fig. 3, S200 further includes, but not limited to, the following step S400.

At S400, when the uplink signal power of each channel of the terminal device is different, the interfered scenario is determined to be an uplink signal interfered scenario.

In an embodiment, the collection of uplink signal power may be achieved by adding a feedback detection circuit in the transmission path of the SRS. In the operating process of the terminal device, when an abnormal change value of the collected uplink and downlink wireless performance parameters is detected, for example, when a decrease of the parameters is detected at a certain moment which results in the inability to meet the service demand, it is usually due to abnormal uplink signal power, and the interfered scenario can be determined to be an uplink signal interfered scenario.

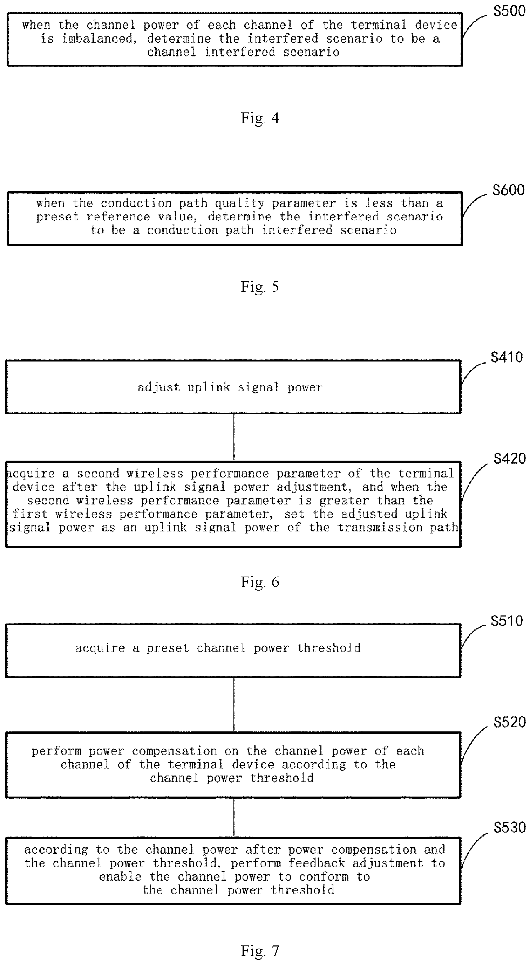

In addition, in an embodiment, the channel quality parameter includes channel power. Referring to Fig. 4, S200 further includes, but not limited to, the following step S500.

At S500, when the channel power of each channel of the terminal device is imbalanced, the interfered scenario is determined to be a channel interfered scenario.

In an embodiment, due to the differences in loss of the transmission paths, there is a difference between a transmitted power of the path and a received RSRP, that is, the channel imbalance. Due to the imbalance of MIMO channels, the signals of each channel of the terminal device collected by the base station are also imbalanced, so it is impossible to carry out balanced resource allocation for the terminal. Meanwhile, since the channels vary from one another, the resource distribution of each path is not the maximum, and a path has a weak uplink signal will be allocated with low wireless performance resources. Therefore, when it is detected that the channel power of each channel of the terminal device is imbalanced, the interfered scenario can be determined as a channel interfered scenario.

In addition, in an embodiment, the channel quality parameter includes a conduction path quality parameter. Referring to Fig. 5, S200 further includes, but not limited to, the following step S600.

At S600, when the conduction path quality parameter is less than a preset reference value, the interfered scenario is determined to be a conduction path interfered scenario.

In an embodiment, since the terminal device has multiple antennas to transmit SRS at the same time, it is necessary to set an antenna selection module in the terminal device, and a path in this module is a conduction path. A conduction path quality parameter can be calculated by means of a signal strength, such as an RSRP difference, an SNR difference, an uplink and downlink error ratio difference, a maximum supportable MCS modulation mode difference, an uplink and downlink wireless performance difference, etc. It should be noted that in order to quickly identify the interference, a preset reference value may be set for each conduction path quality parameter. When a calculated conduction path quality parameter is less than the preset reference value, the effect of transmitting SRS through the conduction path cannot reach the expectation, that is, there is interference. Therefore, it can be determined that the interfered scenario is a conduction path interfered scenario. For example, when the terminal device detects that the current mode is hand-held mode or head-to-head call mode, which has a certain influence on the transmission and reception of antennas, a better conduction path can be selected by means of path recombination.

In addition, referring to Fig. 6, in an embodiment, S400 in the embodiment shown in Fig. 3 further includes, but not limited to, following steps S410 to S420.

At S410, uplink signal power is adjusted.

At S420, a second wireless performance parameter of the terminal device after uplink signal power adjustment is acquired, and when the second wireless performance parameter is greater than the first wireless performance parameter, the adjusted uplink signal power is set as the uplink signal power of the transmission path.

Based on the above embodiment, after the power of each antenna is acquired by the feedback detection circuit in the transmission path of SRS, the uplink signal power may be adjusted arbitrarily, for example, may be increased or decreased. Increasing the uplink signal power may lead to an increase in interference between channels, and decreasing the uplink signal power may result in a decrease in wireless performance parameters. Therefore, in this embodiment, the specific adjustment direction is not limited, but the wireless performance parameters of the terminal device before and after the uplink signal power adjustment are compared, so as to determine uplink signal power more suitable for the current SRS. For example, it is detected that the uplink signal power of four antennas are 15dB, 16dB, 13dB and 17dB, respectively, and the maximum uplink signal power is 17dB. The uplink signal powers of the four antennas are all set to 17dB. If the wireless performance parameter after adjustment is increased as compared with the wireless performance parameter before adjustment, 17dB is used as the uplink signal power of SRS. If the wireless performance parameter after adjustment is decreased as compared with the wireless performance parameter before adjustment, the wireless performance parameter should be further adjusted to 16dB, and so on, until the wireless performance parameter meets the wireless performance parameter threshold, thereby increasing the wireless performance parameters. In addition, after the wireless performance parameters are increased by means of uplink signal power adjustment, a mapping relationship between the uplink signal power and the wireless performance parameters may be saved, so as to quickly adjust the uplink signal power under the same terminal device demand.

In addition, referring to Fig. 7, in an embodiment, S500 in the embodiment shown in Fig. 4 includes, but not limited to, following steps S510 to S530.

At S510, a preset channel power threshold is acquired.

At S520, power compensation is performed on the channel power of each channel of the terminal device according to the channel power threshold.

At S530, according to the channel power after power compensation and the channel power threshold, feedback adjustment is performed to enable the channel power to conform to the channel power threshold.

Based on the above embodiment, maintaining the balancing of all channels in the transmission paths can increase the wireless performance parameters of the terminal device. Channel balancing can usually be achieved by means of the same channel power, so that a channel power threshold may be set in advance, for example, 17dB. If the channel powers of the original signal are respectively 15dB, 16dB, 13dB and 17dB, it can be known from simple difference calculation, that the compensation values of the channel powers for the channels are 2dB, 1dB, 4dB and 0dB, respectively.

It should be noted that power compensation may be achieved in any way, such as by modifying software parameters, etc. It can be understood that in order to improve the transmission quality of transmission paths, the channel power can be compensated adaptively in real time. For example, the channel power of each channel is detected in real time. Automatic adjustment is performed every time a channel is detected not to meet the channel power threshold, or uniform adjustment is performed after completing one traversal. The specific method may be selected according to actual demands, which will not be described in detail here.

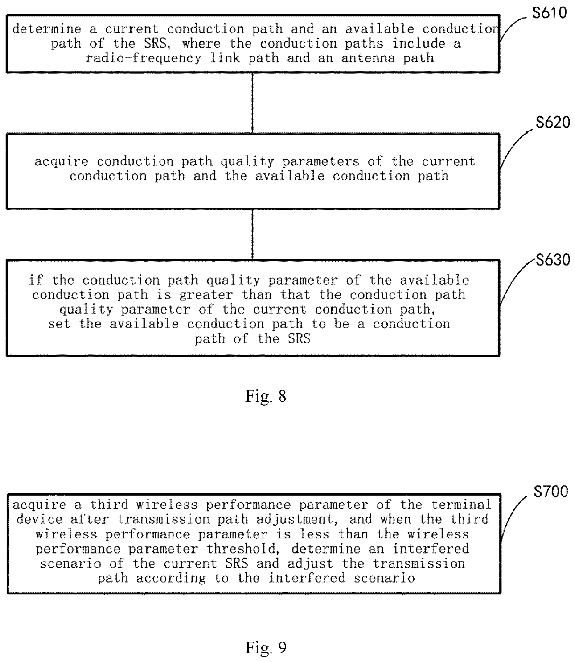

In addition, referring to Fig. 8, in an embodiment, S600 in the embodiment shown in Fig. 5 includes, but not limited to, following steps S610 to S630.

At S610, a current conduction path and an available conduction path of the SRS are determined, where the conduction paths include a radio-frequency link path and an antenna path.

At S620, conduction path quality parameters of the current conduction path and the available conduction path are acquired respectively.

At S630, if the conduction path quality parameter of the available conduction path is greater than the conduction path quality parameter of the current conduction path, the available conduction path is set as a conduction path of the SRS.

In an embodiment, since the terminal device needs to transmit SRS through multiple antennas, the conduction path adjustment is usually completed in the form of recombination. For example, two or four paths of the SRS are recombined, for example, path matching control is performed by Radio Frequency Choke (RFC) switching. It should be noted that the available conduction path may be any available path except the current conduction path, as long as path recombination can be completed by RFC switching.

In an embodiment, various parameters of the conduction path quality parameters may be acquired from reported values of the modern. At S620 in this embodiment, any number and type of parameters may be acquired and compared, or only the parameters smaller than a preset reference value are compared. For example, if the acquired SNR difference is less than the preset reference value, the SNR difference of the current conduction path is acquired. After the SRS is transmitted by means of an available conduction path through path recombination, the SNR difference of the available conduction path is acquired, and the two SNR differences are compared. If the SNR difference of the available conduction path is better, path recombination is reserved; otherwise, another available conduction path is re-selected for recombination. Of course, quality parameters of all available conduction paths may be compared, and an optimal path is selected after the comprehensive performance comparison. The specific method is selected according to the actual demands, as long as a conduction path with higher signal quality, higher throughput rate and more stable rate can be obtained through path recombination, which will not be described in detail here.

In addition, referring to Fig. 9, in an embodiment, after performing S200 in the embodiment shown in Fig. 1, the method further includes, but not limited to, the following step S700.

At S700, a third wireless performance parameter of the terminal device after transmission path adjustment is acquired, and when the third wireless performance parameter is less than the wireless performance parameter threshold, an interfered scenario of the current SRS is determined and the transmission path is adjusted according to the interfered scenario.

In an embodiment, through the judgment of the third wireless performance parameter, a closed-loop feedback adjustment of the transmission path can be achieved. The interference of the transmission path will typically not keep constant. In the process of transmission path adjustment, new interference may appear, or the adjustment result does not accurately reach the wireless performance parameter threshold. For example, after the adjustment of the conduction path is completed through path recombination, new interference may be generated between new conduction path signals, resulting in the wireless performance parameter still being less than the wireless performance parameter threshold. In this case, the wireless performance parameter of the terminal device after transmission path adjustment can be acquired and further compared with the wireless performance parameter threshold for transmission path adjustment.

In an embodiment, the closed-loop feedback may be stopped after the wireless performance parameters meet the wireless performance parameter threshold, or the maximum wireless performance parameter that the terminal device can achieve has been reached. Determination may be made according to the signal quality of the actual application scenarios of the terminal device, which will not be described in detail here.

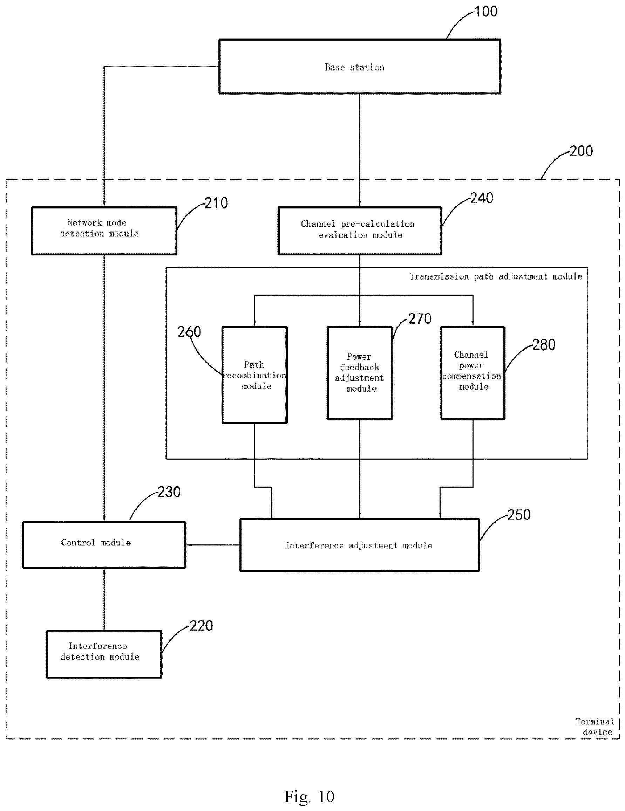

Fig. 10 is a schematic diagram of functional modules of a terminal device for performing an SRS transmission method provided by an embodiment of the present disclosure.

The terminal device 200 includes, but not limited to, a network mode detection module 210, an interference detection module 220, a control module 230, a channel pre-calculation evaluation module 240, an interference adjustment module 250, a path recombination module 260, a power feedback adjustment module 270, and a channel power compensation module 280. The network mode detection module 210 is communicatively connected with the base station 100 and the control module 230, and is configured to acquire network mode parameters of the terminal device. The interference detection module 220 is communicatively connected with the control module 230, and is configured to collect channel quality parameters of the terminal device 200 and send the collected channel quality parameters to the control module 230 for analysis and processing. The control module 230 may be a chip in the terminal device 200, or a processor of the antenna selection module and other devices, as long as it can realize data analysis and processing, and adjust a transmission path in response to an interference adjustment instruction according to a determined adjustment scheme. The channel pre-calculation evaluation module 240 is communicatively connected with the path recombination module 260, the power feedback adjustment module 270, the channel power compensation module 280 and the base station 100 respectively, and is configured to evaluate the quality of transmitted and received signals of each channel of the terminal device 200, so as to determine the wireless performance parameters realized after the transmission path is adjusted. The interference adjustment module 250 is communicatively connected with the path recombination module 260, the power feedback adjustment module 270, the channel power compensation module 280 and the control module 230 respectively, and is configured to acquire the adjustment scheme determined by the path recombination module 260, the power feedback adjustment module 270 or the channel power compensation module 280, and send an interference adjustment instruction to the control module 230, so that the control module 230 transceives an SRS according to the adjusted transmission path. The path recombination module 260 is configured to perform the conduction path recombination in the embodiment shown in Fig. 8. The power feedback adjustment module 270 is configured to perform the adjustment of the uplink signal power in the embodiment shown in Fig. 6. The channel power compensation module 280 is configured to perform the adjustment of the channel power compensation in the embodiment shown in Fig. 7.

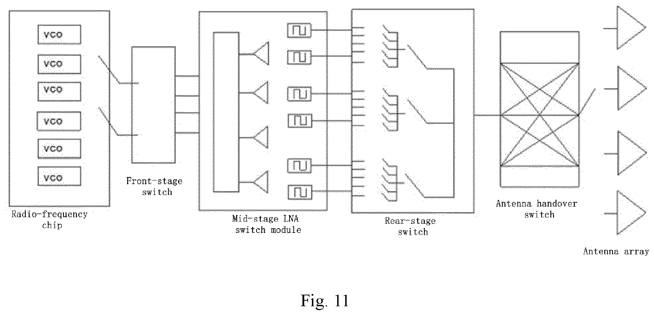

In an embodiment, the schematic diagram of the path recombination module 260 may refer to Fig. 11. A signal is transmitted from a Voltage-Controlled Oscillator (VCO) of the radio-frequency chip, passes through a front-stage switch, a mid-stage Low Noise Amplifier (LNA) switch module, a rear-stage switch, an antenna handover switch, and reaches an antenna array finally. The schematic structural diagram of the path recombination module 260 may refer to Fig. 11. According to different VCOs, the paths passing through switches of various stages are different, and the compatibilities of internal and external hardware channels are different, so different conduction paths are formed. Therefore, two or four groups of conduction paths can be recombined when switching is performed at the switch of each stage. The specific switch switching mode and internal circuit are not the improvements made in this embodiment, which will not be described in detail here.

It should be noted that various modules in the terminal device 200 may be virtual modules that can realize corresponding functions, or existing circuit structures that can realize the functions, which will not be limited in this embodiment.

Those having ordinary skills in the art can understand that the functional modules shown in Fig. 10 do not constitute a limitation to the embodiments of the present disclosure, and may include more or fewer components than shown, or some components may be combined, or a different component arrangement may be included.

In the terminal device shown in Fig. 10, the control module 230 may call a control program stored in the terminal device to perform the SRS transmission method applied to a terminal device.

In addition, an embodiment of the present disclosure further provides a terminal device, including a memory, a processor and a computer program stored in the memory and executable by the processor.

The processor and the memory may be connected by a bus or other means.

The non-transient software programs and instructions required to implement the SRS transmission method in the above embodiment are stored in the memory which, when executed by the processor, cause the processor to implement the SRS transmission method applied to a terminal device in the above embodiment, for example, implement the above described method steps S100 to S200 in Fig. 1, S310 to S330 in Fig. 2, S400 in Fig. 3, S500 in Fig. 4, S600 in Fig. 5, S410 to S420 in Fig. 6, S510 to S520 in Fig. 7, S610 to S630 in Fig. 8, and S700 in Fig. 9.

An embodiment of the present disclosure includes: acquiring a channel quality parameter of a transmission path of an SRS; determining an interfered scenario of the SRS according to the channel quality parameter, and performing an adjustment policy corresponding to the determined interfered scenario. According to the schemes provided by the embodiments of the present disclosure, an interfered scenario of the SRS can be determined, and the transmission path of the SRS is adjusted according to the interfered scenario, such that the interference to the SRS in the transmission path can be reduced, the SRS received by the base station is more stable, and more accurate resources can be allocated to the terminal device, thus improving the wireless performance parameters and transmission performance of the terminal device.

The device embodiments described above are merely illustrative, and the units described as separate components may or may not be physically separated, that is, the units may be located in one place, or may be distributed onto multiple network units. Some or all of the modules may be selected according to actual needs to achieve the purpose of this embodiment.

In addition, an embodiment of the present disclosure further provides a computer-readable storage medium storing a computer-executable instruction which, when executed by a processor or controller, for example, by a processor in the embodiment of the above-mentioned control unit, causes the processor to implement the SRS transmission method applied to a terminal device in the above-mentioned embodiment, for example, implement the above-described method steps S100 to S200 in Fig. 1, S310 to S330 in Fig. 2, S400 in Fig. 3, S500 in Fig. 4, S600 in Fig. 5, S410 to S420 in Fig. 6, S510 to S520 in Fig. 7, S610 to S630 in Fig. 8, and S700 in Fig. 9. Those having ordinary skills in the art can understand that all or some steps and systems in the method disclosed above may be implemented as software, firmware, hardware and appropriate combinations thereof. Some or all of the physical components may be implemented as software executed by a processor, such as a central processing unit, a digital signal processor or a microprocessor, or as hardware, or as an integrated circuit, such as an application specific integrated circuit. Such software may be distributed on a computer-readable medium. The computer-readable medium may include a computer storage medium (or a non-transitory medium) and a communication medium (or a transitory medium). As is well known to those having ordinary skills in the art, the term computer storage medium includes volatile and nonvolatile, removable and non-removable media implemented in any method or technology for storing information such as computer readable instructions, data structures, program modules or other data. A computer storage medium may include RAM, ROM, EEPROM, flash memory or other memory technologies, CD-ROM, digital versatile disk (DVD) or other optical disk storage, magnetic cassette, magnetic tape, magnetic disk storage or other magnetic storage devices, or any other media that can be used to store desired information and can be accessed by a computer. In addition, it is well known to those having ordinary skills in the art that the communication medium may generally include computer readable instructions, data structures, program modules or other data in a modulated data signal such as a carrier wave or other transmission mechanism, and may include any information delivery medium.

The above is a detailed description of some embodiments of the present disclosure, but the present disclosure is not limited to the above embodiments. Those having ordinary skills in the art can also make various equivalent modifications or substitutions without violating the scope of the present disclosure, and these equivalent modifications or substitutions are included in the scope defined by the claims of the present disclosure.

## Claims

1. A Sounding Reference Signal (SRS) transmission method, which is applied to a terminal device, the method comprising:
acquiring a channel quality parameter of a transmission path of an SRS; and
determining an interfered scenario of the SRS according to the channel quality parameter, and performing an adjustment policy corresponding to the determined interfered scenario.

2. The SRS transmission method of claim 1, wherein acquiring a channel quality parameter of a transmission path of an SRS comprises:
acquiring a current transmission demand of the terminal device and a current first wireless performance parameter of the terminal device, and determining a wireless performance parameter threshold according to the current transmission demand;
determining a transmission path of the SRS in response to the first wireless performance parameter being less than the wireless performance parameter threshold; and
acquiring a channel quality parameter of the determined transmission path of the SRS.

3. The SRS transmission method of claim 2, wherein the channel quality parameter comprises an uplink signal power; and determining an interfered scenario of the SRS according to the channel quality parameter comprises:
in response to the uplink signal power of each channel of the terminal device being different, determining the interfered scenario to be an uplink signal interfered scenario.

4. The SRS transmission method of claim 1, wherein the channel quality parameter comprises a channel power; and determining an interfered scenario of the SRS according to the channel quality parameter comprises:
in response to the channel power of each channel of the terminal device being imbalanced, determining the interfered scenario to be a channel interfered scenario.

5. The SRS transmission method of claim 1, wherein the channel quality parameter comprises a conduction path quality parameter; and determining an interfered scenario of the SRS according to the channel quality parameter comprises:
in response to the conduction path quality parameter being less than a preset reference value, determining the interfered scenario to be a conduction path interfered scenario.

6. The SRS transmission method of claim 3, wherein in case that the interfered scenario is determined to be an uplink signal interfered scenario, performing an adjustment policy corresponding to the determined interfered scenario comprises:
adjusting the uplink signal power;
acquiring a second wireless performance parameter of the terminal device after the uplink signal power is adjusted, and in response to the second wireless performance parameter being greater than the first wireless performance parameter, setting the adjusted uplink signal power as an uplink signal power of the transmission path.

7. The SRS transmission method of claim 4, wherein in case that the interfered scenario is determined to be a channel interfered scenario, performing an adjustment policy corresponding to the determined interfered scenario comprises:
acquiring a preset channel power threshold;
performing power compensation on the channel power of each channel of the terminal device according to the channel power threshold; and
performing, according to the channel power after power compensation and the channel power threshold, feedback adjustment to enable the channel power to conform to the channel power threshold.

8. The SRS transmission method of claim 5, wherein in case that the interfered scenario is determined to be a conduction path interfered scenario, performing an adjustment policy corresponding to the determined interfered scenario comprises:
determining a current conduction path and an available conduction path of the SRS, wherein the conduction paths comprise a radio-frequency link path and an antenna path;
acquiring conduction path quality parameters of the current conduction path and the available conduction path; and
in response to the conduction path quality parameter of the available conduction path being greater than the conduction path quality parameter of the current conduction path, setting the available conduction path as a conduction path of the SRS.

9. The SRS transmission method of claim 2, further comprising:
acquiring a third wireless performance parameter of the terminal device after transmission path adjustment, and in response to the third wireless performance parameter being less than the wireless performance parameter threshold, determining an interfered scenario of the current SRS and adjusting the transmission path according to the interfered scenario.

10. A terminal device, comprising: a memory, a processor, and a computer program stored in the memory and executable by the processor, wherein the computer program, when executed by the processor, causes the processor to perform the SRS transmission method of any one of claims 1 to 9.

11. A computer-readable storage medium storing a computer-executable instruction which is used to perform the SRS transmission method of any one of claims 1 to 9.
